# FASCICULE DE BREVET EUROPEEN

(11) **EP 2 513 934 B1**
(45) Date de publication et mention de la délivrance du brevet: **22.04.2015**
(21) Numéro de dépôt: 10787805.0
(22) Date de dépôt: 14.12.2010
(51) Int. Cl.: H01H 3/46, H01H 31/00, H01H 31/02, H02B 13/035, H01H 31/32

(54) **APPAREILLAGE ELECTRIQUE HAUTE OU MOYENNE TENSION DE TYPE BLINDE COMPRENANT UN ARBRE D'ENTRAINEMENT EN ROTATION ET UN CONTACT MOBILE ENTRAINE PAR LEDIT ARBRE AVEC MONTAGE AMELIORE, APPLICATION AUX POSTES TRIPHASES**
GASISOLIERTES, METALLGEKAPSELTES HOCH- ODER MITTELSPANNUNGSSCHALTGERÄT MIT EINER DREHENDEN BETÄTIGUNGSWELLE UND EINEM DADURCH BEWEGLICHEN KONTAKT MIT VERBESSERTER MONTAGE, ANWENDUNG AN DREIPHASIGE SCHALTANLAGEN
GASINSULATED METALENCLOSED HV OR MV SWITCHGEAR COMPRISING A ROTARY DRIVE SHAFT THAT DRIVES A MOBILE CONTACT WITH IMPROVED ASSEMBLY THEREOF, APPLICATION TO THREE PHASE GIS

(30) Priorité: 14.12.2009 FR 0958926
(43) Date de publication de la demande: 24.10.2012
(73) Titulaire: Alstom Technology Ltd., 5400 Baden (CH)
(72) Inventeur: TREIER, Lukas, CH-5043 Holziken (CH)
(74) Mandataire: Ilgart, Jean-Christophe
(86) Numéro de dépôt international: PCT/EP2010/069561
(87) Numéro de publication internationale: WO 2011/073158

(56) Documents cités:
- EP-A2- 0 128 377
- WO-A1-2009/060513
- DE-C1- 19 816 366
- FR-A1- 2 803 117

## Description

### DOMAINE TECHNIQUE

L'invention concerne les appareillages électriques à haute ou moyenne tension de type blindé comprenant un arbre d'entraînement et un contact mobile entraîné par ledit arbre.

L'invention a trait plus particulièrement à leur montage.

L'application principale visée par l'invention concerne les postes blindés triphasés dans lesquels les interrupteurs des trois phases sont logés dans la même cuve métallique.

### ART ANTÉRIEUR

II est connu des postes blindés triphasés dont les interrupteurs sont logés dans la même cuve métallique et dont leur contact mobile est entrâiné par un arbre d'entraînement (aussi appelé arbre de commande) en rotation commun qui est supporté par la cuve métallique.

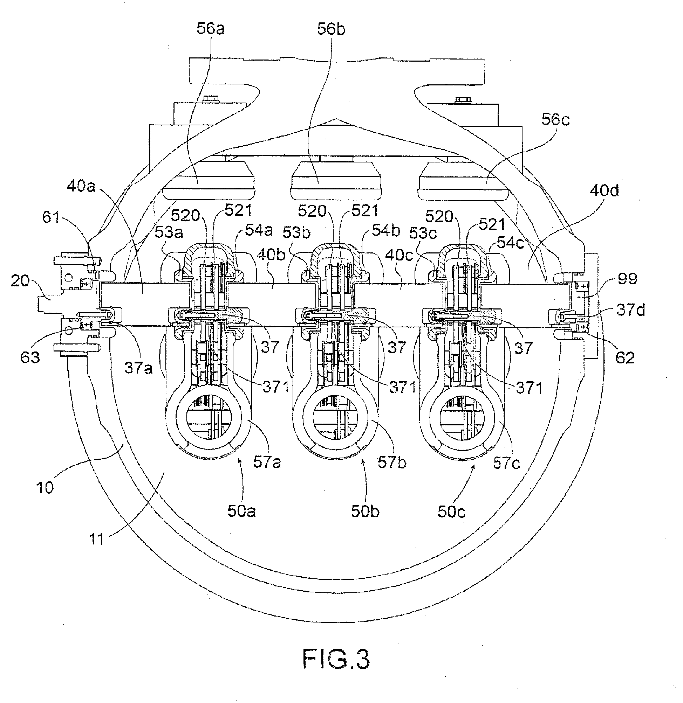

Ainsi, le document DE 198 16 366 C1, divulgue un montage d'interrupteurs à deux ou trois positions dans une cuve métallique commune remplie de gaz isolant. Les contacts mobiles de ces interrupteurs 22, 32, 42 sont entraînés en rotation par des leviers 61 fixés à un arbre d'entraînement en rotation 5 en matériau isolant. Dans le mode de réalisation de la figure 3 tel que décrit en colonne 3 lignes 8 à 25, l'arbre d'entraînement est constitué de deux parties 55, 56. La partie 55 s'étend longitudinalement entre les interrupteurs 21 et 41 des phases les plus éloignés l'un de l'autre tout en entraînant le contact mobile 32 de l'interrupteur 31 agencé en position intermédiaire. Les deux parties d'arbre 55, 56 sont accouplées longitudinalement l'une à l'autre par un manchon rainuré intérieurement 58 qui fait partie intégrante d'un levier 61 intermédiaire d'entraînement du contact mobile 22 directement fixé à une des parties d'arbre 55 et par une bague 57 portée directement par l'autre partie d'arbre 56 et dont les rainures extérieures s'engagent mutuellement dans celles intérieures du manchon 58. En outre, au niveau de chaque phase d'interrupteur 21, 31, 41 l'arbre d'entraînement est porté par des coussinets de paliers 52, 53, 54. A l'une de ses extrémités, l'arbre 5 est fixé à un actionneur en rotation par le biais d'une douille d'accouplement 51 elle-même portée par un palier 15 étanche au gaz isolant à l'intérieur de la cuve métallique 10. Enfin, les trois interrupteurs sont fixés rigidement à un disque isolant 12 par le biais de tronçons métalliques 2, 3, 4 et d'inserts.

Un inconvénient du montage divulgué dans ce document est que la fixation des tronçons métalliques se fait par le biais d'inserts surmoulés et est donc limitée à des disques isolants réalisés par moulage.

Le document DE 102 19 557 A1, divulgue quant à lui une unité d'entraînement avec une partie d'arbre 2 d'entraînement d'interrupteurs en matériau électriquement isolant et de formes complémentaires avec les éléments d'entraînement 3 des contacts mobiles qui sont de section transversale polygonale. Il est prévu un ajustement serré entre la forme polygonale 4 de l'arbre et celle complémentaire de l'élément d'entraînement 3. Ce dernier présente sur sa périphérie externe des dentures droites 5 ou un levier d'entraînement intermédiaire pour entraîner en rotation le contact mobile d'interrupteur. Ce document ne fait pas mention de la manière de réaliser un montage des trois interrupteurs en triphasé sur l'arbre d'entraînement. En outre, la portion d'arbre d'entraînement divulguée 2, 3, 4 ne peut pas participer à la fixation angulaire des interrupteurs.

Le document EP 0128377A2 divulgue une partie d'un poste blindé triphasé dans laquelle un interrupteur-sectionneur a des contacts mobiles de type couteau 52 agencés parallèlement l'un à l'autre et entraînés en rotation par un arbre d'entraînement en matériau isolant 50. Tel que montré en figure 8 et expliqué en page 11, lignes 10 à 35, l'arbre d'entraînement 50 est segmenté en trois parties. Une partie 51a est fixée à l'actionneur d'entraînement en rotation et est agencée sur un côté latéralement à un contact mobile 52, les deux autres parties 51b, 51c sont agencées de part et d'autre latéralement du contact mobile adjacent 52, tandis que seule la partie 51c est agencée sur un côté latéral au dernier contact mobile 52. Le montage de chaque partie segmentée 51a, 51b, 51c avec l'un des contacts mobiles 50 est réalisé au moyen d'un élément d'accouplement 160 emmanché sur un trou borgne 16 pratiqué en bout de la partie segmentée, le moyen d'accouplement 160 étant ajusté sur un ergot 166 formé latéralement sur le contact 52. Ici encore, l'arbre 50 divulgué ne participe pas à la fixation angulaire des interrupteurs.

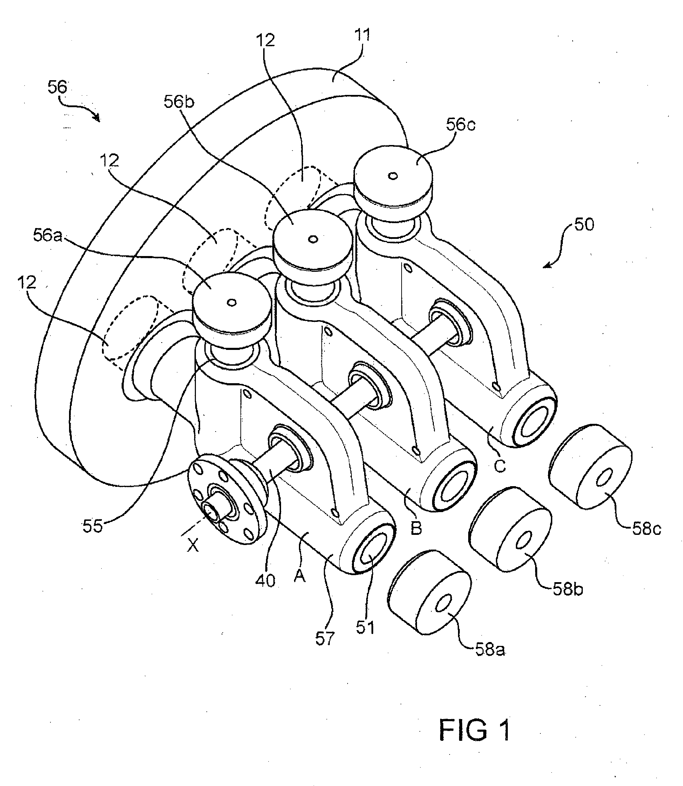

Dans la demande de brevet internationale WO 2010/043604, la demanderesse a proposé un poste blindé triphasé avec une cuve métallique dans laquelle est réalisé le montage de trois enveloppes métalliques 2A, 2B, 2C parallèles entre elles et logeant chacune deux contacts mobiles 200, 210. Tel que montré en figures 1 et 1A de cette demande, les enveloppes métalliques 2A, 2B, et 2C sont fixées à une plaque isolante 3 cylindrique par l'intermédiaire d'un goujon 4 logé dans un trou correspondant de la plaque isolante 3. En outre, les enveloppes 2A à 2C sont fixées entre elles au moyen d'une barre isolante 5 afin de fixer angulairement chaque interrupteur, c'est-à-dire ne pas faire pivoter chaque enveloppe logeant le contact mobile sous l'effet du couple de rotation de l'arbre d'entraînement. Cette solution de montage est globalement satisfaisante.

Les inventeurs ont cherché à améliorer encore le montage de ce type d'interrupteur dont le contact mobile est actionné par un arbre d'entraînement en rotation supporté par une cuve métallique d'un appareillage de type blindé et logé dans une enveloppe métallique elle-même agencée dans la cuve et fixée à une pièce isolante. Ils se sont en effet aperçus que la solution de montage susmentionnée ne considérait pas nécessairement toutes les contraintes susceptibles d'avoir lieu dans ce type d'appareillage et, en particulier les dilatations entre cuve métallique et la pièce isolante.

Le but de l'invention est alors de proposer une nouvelle solution de montage d'un interrupteur dont le contact mobile est actionné par un arbre d'entraînement en rotation supporté par une cuve métallique d'un appareillage de type blindé et logé dans une enveloppe métallique elle-même agencée dans la cuve et fixée à une pièce isolante en un point.

Un but particulier de l'invention est de proposer une solution de montage d'un interrupteur de ce type qui le maintienne dans une position fixe quelque soit le couple de rotation appliqué à l'arbre d'entraînement et les dilatations susceptibles de se produire entre la cuve métallique et la pièce isolante.

Un autre but de l'invention est de proposer une solution de montage d'un interrupteur qui ne transmette pas le couple de rotation de l'arbre d'entraînement à la pièce isolante.

Un autre but de l'invention est de proposer une solution de montage compacte, simple à fabriquer et à installer.

### EXPOSÉ DE L'INVENTION

Pour ce faire, l'invention a pour objet un appareillage électrique haute ou moyenne tension de type blindés, comprenant une cuve métallique remplie d'un gaz isolant diélectrique, une enveloppe métallique agencée à l'intérieur de la cuve et fixée en un point à une pièce isolante également agencée à l'intérieur de la cuve, au moins un contact mobile guidé par l'enveloppe entre une position extrême d'ouverture dans lequel il est complètement logé dans l'enveloppe et une position de fermeture contre un contact fixe, des moyens de liaison pour lier l'enveloppe à la cuve comprenant une barre, les moyens de liaison étant adaptés pour ménager un jeu axial longitudinalement selon la barre entre au moins une partie de la barre et l'enveloppe afin de compenser les dilatations thermiques susceptibles de se produire entre la cuve et la pièce isolante et de minimiser la rotation de l'enveloppe autour du point de fixation sur la pièce isolante.

L'invention a également pour objet un appareillage électrique haute ou moyenne tension de type blindé, comprenant une cuve métallique remplie d'un gaz isolant diélectrique, une enveloppe métallique agencée à l'intérieur de la cuve et fixée en un point à une pièce isolante également agencée à l'intérieur de la cuve, au moins un contact mobile guidé par l'enveloppe entre une position extrême d'ouverture dans lequel il est complètement logé dans l'enveloppe et une position de fermeture contre un contact fixe, un arbre d'entraînement en rotation segmenté en deux parties agencées latéralement de part et d'autre du contact mobile et supportées directement ou indirectement par la cuve, des moyens de liaison pour lier en rotation les deux parties de l'arbre d'entraînement entre elles et avec le contact mobile ou avec au moins un élément d'entraînement intermédiaire du contact mobile, les moyens de liaison étant adaptés pour minimiser la flexion des parties de l'arbre en rotation et pour ménager un jeu axial longitudinalement selon l'arbre entre au moins une partie de l'arbre et le contact ou l'élément d'entraînement du contact afin de compenser les dilatations thermiques susceptibles de se produire entre la cuve et la pièce isolante et de minimiser la rotation de l'enveloppe autour du point de fixation sur la pièce isolante.

Les deux solutions selon l'invention peuvent être réalisées de manière alternative ou cumulative: en d'autres termes, on peut réaliser un jeu axial dans la liaison entre l'enveloppe et la barre de liaison avec la cuve métallique et/ou dans la liaison en rotation de l'arbre segmenté avec l'élément d'entraînement intermédiaire ou le contact mobile.

Autrement dit, selon l'invention, on permet grâce au(x) jeu(x) axial (ux) à la fois de compenser les dilatations thermiques susceptibles de se produire entre cuve métallique et pièce isolante et de minimiser la rotation de l'enveloppe autour du point de fixation sur la pièce isolante.

On conserve ainsi les avantages propres à un arbre d'entraînement segmenté: l'assemblage de l'interrupteur (ou des trois interrupteurs en triphasé) avec la cuve et la pièce isolante est facile à réaliser avec un coût moindre du fait de l'utilisation d'une enveloppe métallique dans laquelle est préassemblé le contact mobile et le cas échéant, le(s) élément(s) d'entraînement intermédiaire(s).

Le(s) contact (s) mobile(s) selon l'invention peu (ven) t être de deux types : soit pivotant (contact couteau), soit coulissant.

Lorsque le contact mobile est monté pivotant, les moyens de liaison en rotation lient en rotation les deux parties de l'arbre d'entraînement et le contact mobile.

Un contact mobile coulissant peut ainsi être monté coulissant dans l'enveloppe au moyen d'au moins un élément d'entraînement intermédiaire.

Un tel contact mobile et ses éléments intermédiaires qui peuvent être mis en oeuvre dans l'invention sont ceux décrits dans la demande de brevet internationale WO 2010/043604 ou dans la demande de brevet européenne EP 2178099.

Selon une caractéristique de l'invention, la fixation en un point entre l'enveloppe métallique et la pièce isolante est réalisée au moyen d'un goujon.

Selon un mode de réalisation préféré, les moyens de liaison comprennent un axe fileté muni d'une tête, une vis munie d'une tête de vissage et dont le filetage est adapté pour coopérer avec celui de l'axe, une rondelle adaptée pour se loger entre l'axe fileté et la vis et un capuchon de tête de vis.

Dans la solution de liaison en rotation de l'arbre segmenté:
- les moyens de liaison comprennent deux axes filetés agencés parallèlement l'un à l'autre et longitudinalement selon l'arbre et sont adaptés pour transmettre le mouvement de rotation entre les deux parties d'arbre et au contact mobile ou à l'élément d'entraînement intermédiaire,
- la vis et l'axe sont vissés entre eux de sorte que l'axe traverse le contact mobile ou le ou les élément(s) d'entraînement intermédiaire(s) et la tête de l'axe et la rondelle soient en appui latéral de part et d'autre du contact mobile; et la tête de l'axe est ajustée avec serrage dans un trou alésé pratiqué en bout d'une des parties d'arbre et le capuchon est également ajustée avec serrage dans un trou alésé pratiqué en bout de l'autre des parties d'arbre; ces ajustements avec serrage permettant de minimiser la flexion entre parties de l'arbre,
- la rondelle et/ou la tête de vis est (sont) ajusté(s) au moins partiellement avec jeu dans le capuchon pour ménager le jeu axial longitudinalement selon l'arbre entre la partie de l'arbre avec laquelle le capuchon est ajusté et le contact ou le ou les élément(s) d'entraînement intermédiaire du contact.

Ainsi, grâce aux ajustements avec serrage entre les pièces d'extrémité des moyens de liaison (capuchon, tête de l'axe) et les parties d'arbre segmentées on réalise par assemblage en quelque sorte un arbre unitaire aux flexions limitées et donc, un pivotement angulaire de l'enveloppe limitée par rapport à son point de fixation à la pièce isolante. Le jeu axial ménagé entre le capuchon et la rondelle permet en outre de compenser les dilatations thermiques entre cuve métallique et pièce isolante tout en maintenant la flexion limitée.

De plus, du fait que selon ce mode préféré, l'enveloppe métallique n'est pas traversée par une partie d'arbre, il y a encore plus d'espace disponible à l'intérieur pour loger tout élément d'entraînement intermédiaire du (des) contact(s) mobile(s).

On peut prévoir entre les deux parties d'arbre, au moins deux axes filetés agencés parallèlement l'un à l'autre et longitudinalement selon l'arbre.

Selon une variante de réalisation, l'axe est ajusté avec serrage dans le contact mobile.

Selon une autre variante de réalisation, l'axe est ajusté avec serrage dans ou dans le ou les élément(s) d'entraînement intermédiaire(s).

La rondelle peut comprendre avantageusement une première portion et une deuxième portion qui s'étend transversalement à la première portion, la première portion étant ajustée librement avec jeu avec une paroi intérieure du capuchon tandis que la deuxième portion de la rondelle est en appui latéral et définit le jeu axial avec le capuchon.

Un montage préféré consiste à avoir deux paliers montés sur l'enveloppe métallique individuellement de part et d'autre du contact mobile, les deux paliers permettant de supporter et de guider en rotation l'axe et donc les deux parties d'arbre.

Il est prévu avantageusement à chaque partie d'arbre un conduit pour relier le trou alésé à l'intérieur de la cuve et ainsi le remplir du gaz isolant diélectrique (SF6).

L'invention concerne également un poste triphasé de moyenne et haute tension sous cuve métallique (PSEM ou GIS en anglais), comportant, au moins pour une phase, un appareillage électrique tel que décrit précédemment dans l'enveloppe duquel est logé au moins partiellement les contacts mobiles de deux interrupteurs, tels qu'un sectionneur de barre et un sectionneur de terre.

En outre, pour chacune des trois phases, il peut être prévu un appareillage électrique dans l'enveloppe duquel sont logés au moins partiellement les contacts mobiles de deux interrupteurs, tels qu'un sectionneur de barre et d'un sectionneur de terre, les trois enveloppes étant logées dans la même cuve métallique avec leurs contacts agencés parallèlement l'un à l'autre et avec un même d'arbre d'entraînement réalisé en quatre parties distinctes et agencé transversalement aux contacts, les deux parties de l'arbre d'entraînement agencées à l'extérieur des enveloppes étant portées par la cuve par l'intermédiaire d'un palier étanche monté dans la cuve, l'une des deux parties agencée à l'extérieur étant reliée à un actionneur agencé à l'extérieur de la cuve.

### BRÈVE DESCRIPTION DES DESSINS

D'autres avantages et caractéristiques ressortiront mieux à la lecture de la description détaillée faite en référence aux figures 1 à 3 qui représentent respectivement:
- la figure 1 montre une vue partielle en perspective d'un poste blindé GIS triphasé selon l'invention en position de terre (sectionneurs de terre fermés),
- la figure 2 est une vue de détail en coupe d'un mode de réalisation d'appareillage électrique dans un poste triphasé selon la figure 1 ;
- la figure 3 est une vue en coupe longitudinale d'un poste blindé GIS triphasé selon l'invention.

### EXPOSÉ DÉTAILLÉ DE MODES DE RÉALISATION PARTICULIERS

Sur la figure 1 est représenté une partie d'un poste de commutation électrique 50 à trois phases A, B, C comprenant trois enveloppes 57 identiques dans chacune desquelles est logé un interrupteur 50a, 50b, 50c. Ces trois enveloppes identiques 57 sont agencées dans une cuve métallique commune 10 et fixées à une plaque isolante 11 en un seul point de fixation par un goujon 12. Les trois interrupteurs 50a, 50b, 50c, (leurs enveloppes 57) sont agencés parallèlement l'une à l'autre dans la cuve métallique 10 et selon le plan de déplacement des contacts mobiles 51, 55. En outre, les contacts mobiles 51, 55 des trois interrupteurs 50a, 50b, 50c sont entraînés en rotation par un arbre d'entraînement en rotation 40 lui-même entraîné en rotation par un actionneur non représenté agencé à l'extérieur de la cuve 10. En outre, comme visible en figure 1, l'axe X de l'arbre d'entraînement 40 et l'axe de positionnement du goujon 12 définissant le point de fixation unique de l'enveloppe 57 à la pièce isolante 11 sont distants l'un de l'autre.

Chaque interrupteur comprend un sectionneur de terre et un sectionneur de barre d'une des phases et ils sont agencés substantiellement dans un même plan et en formant un angle de 90° entre eux. Il va de soi que l'agencement relatif entre sectionneur de terre et de barre peut être différent et tel que les sectionneurs forment un angle compris entre 70° et 180°.

Les contacts mobiles 51, 55 d'une phase et le(s) élément(s) d'entraînement intermédiaires éventuels (autrement appelés moyens de transmission de force) d'une même phase sont agencés dans une même enveloppe 57. Les contacts mobiles 51, 55 peuvent être coulissants dans une ouverture prévue à cet effet dans l'enveloppe 57 en étant guidés par cette dernière. Avantageusement, les éléments d'entraînement intermédiaire sont ceux décrits dans la demande de brevet internationale WO 2010/043604 ou dans la demande de brevet européenne EP 2178099.

Ces contacts mobiles 51, 55 pourraient être également des contacts de type couteau.

Les contacts fixes 56a, 56b, 56c des sectionneurs de terre sont chacun fixés à l'intérieur de la cuve métallique commune 10 (figure 3). Les contacts fixes 58a, 58b, 58c des sectionneurs de barre sont chacun fixés à un conducteur de barre omnibus non représentés. Un tel agencement des contacts mobiles 51, 55 et des éléments d'entraînement intermédiaire permet aux forces de transmission d'être supportées par la même enveloppe 57. L'enveloppe métallique 57 commune agit comme un capotage diélectrique des éléments sous tension électrique, ce qui augmente la résistance diélectrique et réduit les décharges partielles. L'enveloppe agit également comme un élément conducteur pour la transmission du courant de chaque conducteur vers les contacts mobiles. Les contacts mobiles 51, 55 sont ramenés à l'intérieur de l'enveloppe dans leur position d'ouverture.

Tels que représentés, les contacts mobiles 51, 55 sont sous la forme de cylindre de révolution creux débouchant de part et d'autre à leur extrémité. Les contacts fixes ou électrodes 56, 58 sont sous la forme de cylindre de révolution creux mais débouchant uniquement du côté en regard du contact mobile 51, 55 correspondant. Aussi, la proximité de ou la position de fermeture d'un contact mobile d'un interrupteur donné, sectionneur de terre ou sectionneur de barre, correspond à un emboîtement complet ou quasi-complet du contact mobile 51, 55 dans le contact fixe 58, 56 correspondant.

Chaque appareillage A, B, C (une phase) avec son enveloppe 57, ses contacts mobiles 51, 55 et une partie de ses éléments d'entraînement communs aux contacts mobiles (levier, biellette) peut être préassemblé, ce qui réduit les coûts de fabrication.

Dans l'ensemble des modes de réalisation illustrés, les éléments d'entraînement intermédiaires et communs aux contacts mobiles, 51, 55 permettent l'ouverture du sectionneur de terre tout en maintenant la fermeture du sectionneur de barre et vice-versa. Le fait que les contacts mobiles 51, 55 ne se déplacent que très peu dans leur position d'ouverture permet d'obtenir un gain de place pour l'enveloppe 57.

Afin de faciliter l'assemblage, les inventeurs ont cherché à utiliser un arbre d'entraînement segmenté 40 en parties dont deux parties agencées de part et d'autre de chaque interrupteur comme montré en figure 3 et expliqué ci-après.

Ils ont ainsi cherché une nouvelle solution de montage simplifiée de chaque interrupteur A, B, C avec un entraînement 40 segmenté de part et d'autre et avec une fixation de leur enveloppe métallique 57 à la plaque isolante 11 en un seul point de fixation par goujon 12 et qui respecte les contraintes techniques suivantes :
- l'interrupteur doit être limité en rotation autour du point de fixation 12 dans le disque 11, à une valeur acceptable pour les contacts, typiquement moins de 1°, et
- les dilatations thermiques entre cuve métallique 10 et plaque isolante 11 susceptibles de se produire doivent pouvoir être compensées.

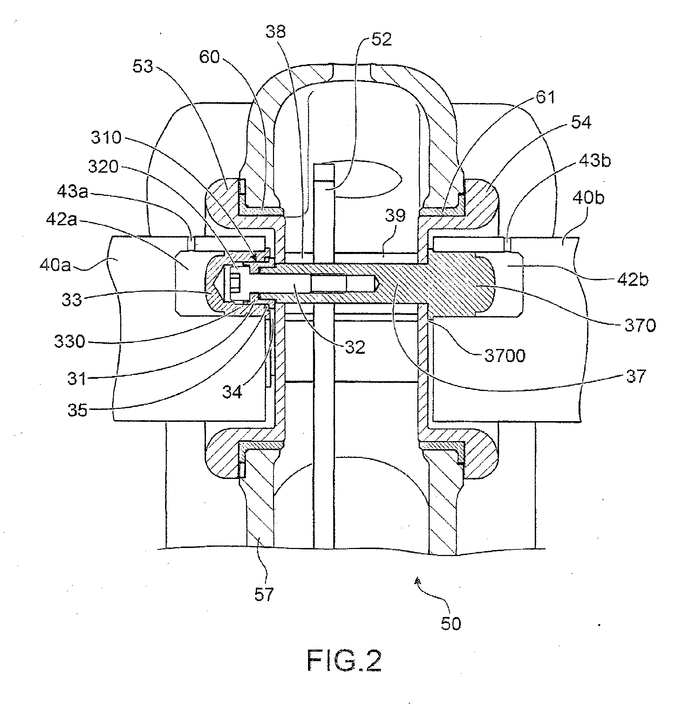

La figure 2 illustre la solution préférée de l'invention.

La liaison en rotation entre les deux parties d'arbre d'entraînement 40a, 40b est assurée au moyen d'au moins deux axes filetés 37 ajustés chacun avec serrage dans un élément intermédiaire 52 d'entraînement du contact mobile. Comme décrit ci-après, les deux parties d'arbre 40a, 40b sont supportées respectivement directement et indirectement par la cuve métallique 10.

L'axe fileté 37 est supporté et guidé en rotation par deux paliers montés sur l'enveloppe métallique 57 individuellement de part et d'autre de l'élément d'entraînement intermédiaire du contact 52, les deux paliers permettant de supporter et de guider en rotation l'axe. Plus exactement, chaque palier est de type à friction et comprend une partie roulement 53, 54 et une bague de friction emmanchée dans l'enveloppe 57 de telle sorte que la partie roulement 53, 54 est libre en rotation par rapport à l'enveloppe 57. Les deux paliers 53, 60 et 54, 61 sont distants l'un de l'autre au moyen de deux entretoises tubulaires 38, 39 agencée chacune autour de l'axe 37 et de l'élément d'entraînement 52. L'élément d'entraînement 52 est ainsi serré au moyen de ces deux entretoises tubulaires 38, 39.

L'axe fileté 37 est muni d'une tête 370 ajustée avec serrage dans un trou alésé 42b pratiqué en bout de la partie d'arbre 40b. De préférence, il est prévu deux voire trois axes 37 identiques parallèles entre eux et agencés selon l'arbre 40.

Une rondelle 31 est insérée entre l'axe fileté 37 et la vis 32 vissée dans ledit axe 37. La rondelle 31 comprend une première portion 310 et une deuxième portion 34 qui s'étend transversalement à la première portion 310 en formant un épaulement.

Un capuchon 33 de vis est ajusté avec serrage dans un trou alésé 42a pratiqué en bout de la partie d'arbre 40a.

En configuration vissée (figure 2), l'axe fileté 37 et la rondelle 31 sont fixés aux parties 53, 54 de roulement et à l'élément intermédiaire d'entraînement 52 du contact. Plus exactement, la rondelle 31 est en appui latéral par sa portion épaulement 34 contre la partie roulement 53 tandis que la tête 370 de l'axe 37 est en appui latéral par une portion formant épaulement 3700 contre la partie roulement 54.

La portion 310 de rondelle 31 est ajustée librement avec jeu de moins de 0,1 mm dans une paroi intérieure 330 du capuchon 33. Un espace axial 35 le long de l'arbre est défini entre le capuchon 33 et l'épaulement 34 de la rondelle 31.

Ainsi, l'axe traversant 37 vissé, les ajustements avec serrage respectivement entre la tête 370 d'axe 37 et le trou 42b de la partie d'arbre 40b et entre le capuchon 33 et le trou 42a de l'autre partie d'arbre 40a permettent de minimiser la rotation de l'enveloppe 57 autour du point de fixation 12 à une valeur acceptable pour les contacts et de minimiser la déflexion angulaire de l'enveloppe 57 et donc de l'interrupteur logé en partie à l'intérieur. En outre, les efforts transmis à la plaque isolante 12 sont minimes.

Grâce au jeu d'ajustement libre entre portion 310 de rondelle 31 et le capuchon 33 et à l'espace axial 35, un jeu axial 35 est ménagé qui permet à la fois de maintenir les flexions d'arbre minimises et de compenser les dilatations thermiques susceptibles d'être transmises entre la cuve 10 et la plaque isolante 11.

Par ailleurs, chaque trou alésé 42a, 42b est relié à l'intérieur de la cuve 10 par un conduit d'aération 43a, 43b, ce qui permet de remplir complètement ce volume par le gaz diélectrique isolant, tel que SF6, de l'air ou de l'azote pressurisé, et ainsi définir un volume isolant entre parties d'arbres 40a, 40b en matériau isolant et axe 37 ou vis 32/capuchon 33 métalliques.

Le poste blindé (GIS) triphasé représenté reproduit la solution de montage pour les quatre segments d'arbre 40a, 40b, 40c, 40d. Dans ce poste triphasé, chaque enveloppe 57a, 57b, 57c loge au moins partiellement les contacts mobiles 51a, 55a ; 51b, 55b ; 51c, 55c de deux interrupteurs, tels qu'un sectionneur de barre et d'un sectionneur de terre. Les trois enveloppes 57a, 57b, 57c sont logées dans la même cuve métallique 10 avec les contacts agencés parallèlement l'un à l'autre.

Tel qu'illustré, les éléments d'entraînement intermédiaire 520, 521 et 371 sont au nombre de trois, l'un d'eux 371 étant constitué par une bague 371 ajustée serré autour de l'axe fileté et dans les deux autres éléments d'entraînement intermédiaire 520, 521.

L'actionneur agencé à l'extérieur de la cuve 10 entraîne une traversée 20 portée par un roulement à billes 63 monté de manière étanche dans la cuve 10. La traversée 20 entraîne directement une première partie d'arbre 40a au moyen deux axes filetés 37a ajustés chacun avec serrage dans cette partie d'arbre 40a. Les axes entraînent en rotation les éléments intermédiaires 520, 521 et les roulements 53a, 54a, mais également le segment adjacent 40b de l'arbre d'entraînement. Les éléments 520, 521 entraînent par des moyens supplémentaires de transmission les contacts mobiles 51a, 55a.

Le deuxième roulement 54a est fixé à la deuxième partie d'arbre 40b par le premier axe fileté selon l'invention 37 et l'entraîne ainsi en rotation.

Il en va de même pour les parties d'arbre segmenté 40c et 40d, les deux contacts mobiles 51b, 55b et 51c, 55c étant entraînés en rotation de la même manière par les roulements 53b, 54b et 53c, 54c et les deuxième et troisième axes filetés 37 selon l'invention.

A l'extrémité d'arbre opposée à la traversée 20, la quatrième partie d'arbre 40d segmenté est supportée par une bague 99 elle-même supportée par un roulement à billes 62 monté de manière étanche dans la cuve métallique 10.

Avec la solution selon l'invention qui vient d'être décrite, l'arbre 40, 40a, 40b, 40c, 40d est capable de compenser les dilatations thermiques et de limiter la rotation de l'enveloppe 57 et de transmettre un couple de rotation important.

Un autre avantage lié à la mise en oeuvre de la liaison entre deux parties d'arbre 40a, 40b ; 40b, 40c et 40c, 40d segmenté par l'axe fileté 37 est que l'enveloppe 57 entre ces deux parties n'a pas à être traversée par l'arbre qui est de diamètre plus important que l'axe fileté : l'espace intérieur à l'enveloppe est ainsi plus important pour l'agencement des éléments de transmission 52, 520, 521.

Tous les tests diélectriques et mécaniques selon les normes en vigueur ont été réalisés avec succès dans le poste blindé selon l'invention.

Si dans la description détaillée, seule la solution portant sur l'arbre d'entraînement est décrite et montrée, l'invention concerne également une solution alternative. Selon cette solution alternative, les moyens de liaison permettent de lier en rotation l'enveloppe 57 logeant un ou plusieurs contacts mobiles à une barre ayant les mêmes caractéristiques que l'arbre d'entraînement 40 mais sans avoir à transmettre un couple d'entraînement aux contacts mobiles. Dans ce cas, la barre est utilisée pour limiter la rotation de l'enveloppe 57 autour de l'axe du goujon 12 à une valeur acceptable, typiquement inférieure à 1°. Dans ce cas également, le couple d'entraînement est fourni par un système distinct, tel qu'un système de pignon/crémaillères ou autres. Le fait que la barre n'est pas supportée par des paliers tels que ceux référencés 60, 61, 62, 63 en figure 3 est un autre avantage de cette solution alternative. Ainsi cette solution alternative ne nécessite pas d'élément de transmission intermédiaire tel que celui référence 52 en figure 2 et les deux entretoises tubulaires telles que celles référencées 38, 39 soient remplacées par une seule. Enfin, selon cette alternative, il est également possible dans ce cas d'utiliser un seul axe 37.

## Revendications

1. Appareillage électrique (A, B, C) haute ou moyenne tension de type blindé, comprenant une cuve métallique (10) remplie d'un gaz isolant diélectrique, une enveloppe (57) métallique agencée à l'intérieur de la cuve et fixée en un point (12) à une pièce isolante (11) également agencée à l'intérieur de la cuve, au moins un contact mobile (51, 55) guidé par l'enveloppe (57) entre une position extrême d'ouverture dans lequel il est complètement logé dans l'enveloppe et une position de fermeture contre un contact fixe (58, 56), des moyens de liaison pour lier l'enveloppe (57) à la cuve comprenant une barre, les moyens de liaison étant adaptés pour ménager un jeu axial longitudinalement selon la barre entre au moins une partie de la barre et l'enveloppe afin de compenser les dilatations thermiques susceptibles de se produire entre la cuve et la pièce isolante et de minimiser la rotation de l'enveloppe (57) autour du point de fixation (12) sur la pièce isolante (11).

2. Appareillage électrique (A, B, C) haute ou moyenne tension de type blindé, comprenant une cuve métallique (10) remplie d'un gaz isolant diélectrique, une enveloppe (57) métallique agencée à l'intérieur de la cuve et fixée en un point (12) à une pièce isolante (11) également agencée à l'intérieur de la cuve, au moins un contact mobile (51, 55) guidé par l'enveloppe (57) entre une position extrême d'ouverture dans lequel il est complètement logé dans l'enveloppe et une position de fermeture contre un contact fixe (58, 56), un arbre d'entraînement (40) en rotation segmenté en deux parties (40a, 40b) agencées latéralement de part et d'autre du contact mobile et supportées directement ou indirectement par la cuve, des moyens de liaison (31, 32, 33, 37) pour lier en rotation les deux parties de l'arbre d'entraînement entre elles et avec le contact mobile ou avec au moins un élément d'entraînement intermédiaire (52, 520, 521, 371) du contact mobile, les moyens de liaison étant adaptés pour ménager un jeu axial (35) longitudinalement selon l'arbre entre au moins une partie de l'arbre et le contact ou l'élément d'entraînement du contact afin de compenser les dilatations thermiques susceptibles de se produire entre la cuve et la pièce isolante et de minimiser la rotation de l'enveloppe (57) autour du point de fixation (12) sur la pièce isolante (11).

3. Appareillage électrique (A, B, C) selon la revendication 1 ou 2, dans lequel le contact mobile est monté coulissant dans l'enveloppe au moyen d'au moins un élément d'entraînement intermédiaire (52, 520, 521, 371).

4. Appareillage électrique (A, B, C) selon la revendication 1 ou 2, dans lequel le contact mobile est monté pivotant, les moyens de liaison en rotation liant en rotation les deux parties de l'arbre d'entraînement et le contact mobile.

5. Appareillage électrique (A, B, C) selon l'une des revendications précédentes, dans lequel la fixation en un point entre l'enveloppe métallique et la pièce isolante est réalisée au moyen d'un goujon (12).

6. Appareillage électrique (A, B, C) selon l'une des revendications précédentes, dans lequel les moyens de liaison comprennent au moins un axe fileté (37) muni d'une tête (370), une vis (32) munie d'une tête de vissage (320) et dont le filetage est adapté pour coopérer avec celui de l'axe, une rondelle (31) adaptée pour se loger entre l'axe fileté et la vis et un capuchon (33) de tête de vis.

7. Appareillage selon la revendication 6 en combinaison avec la revendication 2, dans lequel les moyens de liaison comprennent deux axes filetés (37) agencés parallèlement l'un à l'autre et longitudinalement selon l'arbre et sont adaptés pour transmettre le mouvement de rotation entre les deux parties d'arbre et au contact mobile ou à l'élément d'entraînement intermédiaire dans lequel la vis et l'axe sont vissés entre eux de sorte que l'axe traverse le contact mobile ou le ou les élément(s) d'entraînement intermédiaire(s) et la tête de l'axe et la rondelle soient en appui latéral de part et d'autre du contact mobile,
dans lequel la tête (370) de l'axe est ajustée avec serrage dans un trou (42b) alésé pratiqué en bout d'une (40b) des parties d'arbre et le capuchon (33) est également ajustée avec serrage dans un trou alésé (42a) pratiqué en bout de l'autre (40a) des parties d'arbre ; ces ajustements avec serrage permettant de minimiser la flexion entre parties de l'arbre (40a, 40b),
et dans lequel la rondelle (31) et/ou la tête (320) de vis est (sont) ajusté(s) au moins partiellement avec jeu dans le capuchon pour ménager le jeu axial (35) longitudinalement selon l'arbre entre la partie de l'arbre (40a) avec laquelle le capuchon (33) est ajusté et le contact ou le ou les élément (s) d'entraînement intermédiaire du contact (52).

8. Appareillage électrique (A, B, C) selon la revendication 7, dans lequel l'élément d'entraînement intermédiaire (52) du contact mobile est serré par deux entretoises tubulaires (38, 39) de part et d'autre de celui-ci.

9. Appareillage électrique (A, B, C) selon l'une des revendications 6 à 8, dans lequel la rondelle (31) comprend une première portion (310) et une deuxième portion (34) qui s'étend transversalement à la première portion, la première portion étant ajustée librement avec jeu avec une paroi intérieure (330) du capuchon (33) tandis que la deuxième portion de la rondelle est en appui latéral et définit le jeu axial avec le capuchon.

10. Appareillage électrique (A, B, C) selon l'une des revendications 7 à 9, comprenant deux paliers (53, 60 ; 54, 61) montés sur l'enveloppe métallique (37) individuellement de part et d'autre du contact mobile, les deux paliers permettant de supporter et de guider en rotation l'axe et donc les deux parties d'arbre.

11. Appareillage électrique (A, B, C) selon l'une des revendications 7 à 10, dans lequel chaque partie d'arbre (40a, 40b) comprend un conduit (43a, 43b) pour relier le trou alésé (42a, 42b) à l'intérieur de la cuve et ainsi le remplir du gaz isolant diélectrique (SF6).

12. Poste triphasé de moyenne ou haute tension sous cuve métallique (GIS), comportant, au moins pour une phase, un appareillage électrique (A, B, C) selon l'une des revendications précédentes dans l'enveloppe (57) duquel est logé au moins partiellement les contacts mobiles (51, 55) de deux interrupteurs, tels qu'un sectionneur de barre et un sectionneur de terre.

13. Poste triphasé (GIS) selon la revendication 12, comportant pour chacune des trois phases un appareillage électrique (A, B, C) selon l'une des revendications précédentes dans l'enveloppe (57) duquel sont logés au moins partiellement les contacts mobiles (51a, 55a ; 51b, 55b ; 51c, 55c) de deux interrupteurs, tels qu'un sectionneur de barre et d'un sectionneur de terre, les trois enveloppes (57) étant logées dans la même cuve métallique (10) avec leurs contacts agencés parallèlement l'un à l'autre et avec un même arbre d'entraînement réalisé en quatre parties distinctes (40a, 40b, 40c, 40d) et agencé transversalement aux contacts, les deux parties (40a, 40d) de l'arbre d'entraînement agencées à l'extérieur des enveloppes (57) étant portées par la cuve par l'intermédiaire d'un palier (62, 63) monté étanche dans la cuve, l'une des deux parties (40a) agencée à l'extérieur étant reliée à un actionneur agencé à l'extérieur de la cuve.

## Patentansprüche

1. Gekapseltes Hoch- bzw. Mittelspannungsschaltgerät (A, B, C), enthaltend eine mit einem dielektrischen Isoliergas gefüllte Metallkapselung (10), ein Metallgehäuse (57), das innerhalb der Kapselung angeordnet ist und an einem Punkt (12) an ein Isolierteil (11) befestigt ist, das auch innerhalb der Kapselung angeordnet ist, zumindest ein bewegliches Kontaktstück (51, 55), das über das Gehäuse (57) zwischen einer ersten Öffnungsendstellung, in welcher es vollständig im Gehäuse aufgenommen ist, und einer Schließstellung gegen ein festes Kontaktstück (58, 56) geführt wird, wobei Verbindungsmittel zum Verbinden des Gehäuses (57) mit der Kapselung eine Schiene enthalten, wobei die Verbindungsmittel dazu geeignet sind, ein axial verlaufendes Spiel longitudinal entlang der Schiene zwischen zumindest einem Teil der Schiene und dem Gehäuse freizulassen, um Wärmeausdehnungen zu kompensieren, die zwischen der Kapselung und dem Isolierteil entstehen können, und um die Drehung des Gehäuses (57) um den Befestigungspunkt (12) am Isolierteil (11) zu minimieren.

2. Gekapseltes Hoch- bzw. Mittelspannungsschaltgerät (A, B, C), enthaltend eine mit einem dielektrischen Isoliergas gefüllte Metallkapselung (10), ein Metallgehäuse (57), das innerhalb der Kapselung angeordnet ist und an einem Punkt (12) an ein Isolierteil (11) befestigt ist, das auch innerhalb der Kapselung angeordnet ist, zumindest ein bewegliches Kontaktstück (51, 55), das zwischen einer ersten Öffnungsendstellung, in welcher es vollständig im Gehäuse aufgenommen ist, und einer Schließstellung gegen ein festes Kontaktstück (58, 56) über das Gehäuse (57) geführt wird, eine Drehantriebswelle (40), die in zwei Teile (40a, 40b) segmentiert ist, die seitlich auf beiden Seiten des beweglichen Kontaktstücks angeordnet sind und direkt oder indirekt von der Kapselung getragen werden, sowie Verbindungsmittel (31, 32, 33, 37) zur Drehverbindung der beiden Teile der Antriebswelle untereinander und mit dem beweglichen Kontaktstück oder mit zumindest einem Antriebszwischenelement (52, 520, 521, 371) des beweglichen Kontaktstücks, wobei die Verbindungsmittel dazu geeignet sind, ein axial verlaufendes Spiel (35) longitudinal entlang der Welle zwischen zumindest einem Teil der Welle und dem Kontaktstück bzw. dem Antriebselement des Kontaktstücks freizulassen, um Wärmeausdehnungen zu kompensieren, die zwischen der Kapselung und dem Isolierteil entstehen können, und um die Drehung des Gehäuses (57) um den Befestigungspunkt (12) am Isolierteil (11) zu minimieren.

3. Schaltgerät (A, B, C) nach Anspruch 1 oder 2, wobei das bewegliche Kontaktstück über zumindest ein Antriebszwischenelement (52, 520, 521, 372) gleitbeweglich im Gehäuse gelagert ist.

4. Schaltgerät (A, B, C) nach Anspruch 1 oder 2, wobei das bewegliche Kontaktstück verschwenkbar gelagert ist, wobei die Drehverbindungsmittel die beiden Teile der Antriebswelle und das bewegliche Kontaktstück drehbar verbinden.

5. Schaltgerät (A, B, C) nach einem der vorangehenden Ansprüche, wobei die Befestigung an einem Punkt zwischen dem Metallgehäuse und dem Isolierteil über einen Zapfen (12) erfolgt.

6. Schaltgerät (A, B, C) nach einem der vorangehenden Ansprüche, wobei die Verbindungsmittel zumindest eine mit einem Kopf (370) versehene Gewindeachse (37), eine mit einem Schraubkopf (320) versehene Schraube (32), deren Gewinde dazu geeignet ist, mit dem der Achse zusammenzuwirken, und eine Unterlegscheibe (31) aufweisen, die dazu geeignet ist, zwischen der Gewindeachse und der Schraube und einer Schraubkopf-Abdeckkappe (33) aufgenommen zu werden.

7. Schaltgerät nach Anspruch 6 in Kombination mit Anspruch 2, wobei die Verbindungsmittel zwei Gewindeachsen (37) aufweisen, die parallel zueinander und longitudinal entlang der Welle angeordnet sind und dazu geeignet sind, die Drehbewegung zwischen den beiden Teilen der Welle auf das bewegliche Kontaktstück oder auf das Antriebszwischenelement zu übertragen, wobei die Schraube und die Achse so miteinander verschraubt sind, dass die Achse sich durch das bewegliche Kontaktstück oder das bzw. die Antriebszwischenelement(e) erstrecken und der Kopf der Achse und die Unterlegscheibe sich seitlich auf beiden Seiten des beweglichen Kontaktstücks abstützen,
wobei der Kopf (370) der Achse mit Presssitz in eine Bohrung (42b) eingepasst ist, die am Ende eines (40b) der Teile der Welle ausgeführt ist, und wobei auch die Abdeckkappe (33) mit Presssitz in eine Bohrung (42a) eingepasst ist, die am Ende des anderen (40a) der Teile der Welle ausgeführt ist, wobei diese Presssitze gestatten, die Biegung zwischen den Teilen der Welle (40a, 40b) zu minimieren,
und wobei die Unterlegscheibe (31) und/oder der Schraubenkopf (320) zumindest teilweise mit Spiel in die Abdeckkappe eingepasst ist/sind, um das axial verlaufende Spiel (35) longitudinal entlang der Welle zwischen dem Teil der Welle (40a), in den die Abdeckkappe (33) eingepasst ist, und dem Kontaktstück oder dem bzw. den Antriebszwischenelement(en) des Kontaktstücks (52) freizulassen.

8. Schaltgerät (A, B, C) nach Anspruch 7, wobei das Antriebszwischenelement (52) des beweglichen Kontaktstücks über zwei rohrförmige Verstrebungen (38, 39) auf beiden Seiten desselben verspannt ist.

9. Schaltgerät (A, B, C) nach einem der Ansprüche 6 bis 8, wobei die Unterlegscheibe (31) einen ersten Abschnitt (310) und einen zweiten Abschnitt (34) aufweist, der sich quer zum ersten Abschnitt erstreckt, wobei der erste Abschnitt frei mit Spiel mit einer Innenwand (330) der Abdeckkappe (33) abgestimmt ist, während der zweite Abschnitt der Unterlegscheibe sich seitlich abstützt und mit der Abdeckkappe das axiale Spiel definiert.

10. Schaltgerät (A, B, C) nach einem der Ansprüche 7 bis 9, enthaltend zwei Lager (53, 60; 54, 61), die einzeln auf beiden Seiten des beweglichen Kontaktstücks an dem Metallgehäuse (37) angebracht sind, wobei die beiden Lager gestatten, die Achse und damit die beiden Wellenteile zu tragen und drehbar zu führen.

11. Schaltgerät (A, B, C) nach einem der Ansprüche 7 bis 10, wobei jedes Wellenteil (40a, 40b) eine Leitung (43a, 43b) aufweist, um die Bohrung (42a, 42b) mit dem Innenraum der Kapselung zu verbinden und sie somit mit dielektrischem Isoliergas (SF6) zu befüllen.

12. Metallgekapselte, dreiphasige Mittel- bzw. Hochspannungsschaltanlage (GIS), enthaltend zumindest für eine Phase ein Schaltgerät (A, B, C) nach einem der vorangehenden Ansprüche, in deren Gehäuse (57) zumindest teilweise die beweglichen Kontaktstücke (51, 55) von zwei Schaltern, wie etwa einem Schienentrennschalter und einem Erdungstrennschalter, aufgenommen sind.

13. Dreiphasige Schaltanlage (GIS) nach Anspruch 12, enthaltend für jede der drei Phasen ein Schaltgerät (A, B, C) nach einem der vorangehenden Ansprüche, in deren Gehäuse (57) zumindest teilweise die beweglichen Kontaktstücke (51 a, 55a; 51 b, 55b; 51 c, 55c) von zwei Schaltern, wie etwa einem Schienentrennschalter und einem Erdungstrennschalter, aufgenommen sind, wobei die drei Gehäuse (57) in der gleichen Metallkapselung (10) mit ihren parallel zueinander angeordneten Kontaktstücken und mit einer gleichen Antriebswelle aufgenommen sind, die in vier separaten Teilen (40a, 40b, 40c, 40d) ausgeführt und quer zu den Kontaktstücken angeordnet ist, wobei die beiden außerhalb der Gehäuse (57) angeordneten Teile (40a, 40b) der Antriebswelle über ein dicht in der Kapselung angebrachtes Lager (62, 63) von der Kapselung getragen werden, wobei einer der beiden Teile (40a), der außerhalb angeordnet ist, mit einem Betätigungsglied verbunden ist, das außerhalb der Kapselung angeordnet ist.

## Claims

1. High- or medium-voltage electrical switchgear (A, B, C) of the gas-insulated type comprising a metal tank (10) filled with a dielectric insulating gas, a metal casing (57) arranged inside the tank and fastened at a single point (12) to an insulating part (11) also arranged inside the tank, at least one movable contact (51, 55) guided by the casing (57) between an extreme open position in which it is fully received inside the casing, and a closed position against a stationary contact (58, 56), connection means for connecting the casing (57) to the tank comprising a bar, the connection means being adapted to provide axial clearance longitudinally along the bar between at least a portion of the bar and the casing in order to compensate for thermal expansion that might occur between the tank and the insulating part and to minimize turning of the casing (57) about its fastening point (12) on the insulating part (11).

2. High- or medium-voltage electrical switchgear (A, B, C) of the gas-insulated type comprising a metal tank (10) filled with a dielectric insulating gas, a metal casing (57) arranged inside the tank and fastened at a single point (12) to an insulating part (11) also arranged inside the tank, at least one movable contact (51, 55) guided by the casing (57) between an extreme open position in which it is fully received inside the casing, and a closed position against a stationary contact (58, 56), a rotary drive shaft (40) segmented in two portions (40a, 40b) arranged laterally on either side of the movable contact and supported directly or indirectly by the tank, connection means (31, 32, 33, 37) for connecting the two drive shaft portions in rotation with each other and with the movable contact or with at least an intermediate drive element (52, 520, 521, 371) for driving the movable contact, the connection means being adapted to provide axial clearance (35) longitudinally along the bar between at least a portion of the bar and the contact or the contact drive element in order to compensate for thermal expansion that might occur between the tank and the insulating part and to minimize turning of the casing (57) about its fastening point (12) on the insulating part (11).

3. Electrical switchgear (A, B, C) according to claim 1 or claim 2, wherein the movable contact is mounted to slide in the casing by means of at least one intermediate drive element (52, 520, 521, 371).

4. Electrical switchgear (A, B, C) according to claim 1 or claim 2, wherein the movable contact is pivotally mounted, the rotary connection means connecting together the two portions of the drive shaft and the movable contact in rotation.

5. Electrical switchgear (A, B, C) according to any preceding claim, wherein the single point fastening between the metal casing and the insulating part is provided by means of a stud (12).

6. Electrical switchgear (A, B, C) according to any preceding claim, wherein the connection means comprise at least one threaded pin (37) provided with a head (370), a screw (32) provided with a screw-tightening head (320) with its thread adapted to co-operate with the thread of the pin, a washer (31) adapted to be received between the threaded pin and the screw, and a screw head cap (33).

7. Switchgear according to claim 6 in combination with claim 2, wherein the connection means comprise two threaded pins (37) arranged parallel to each other and longitudinally along the shaft, and are adapted to transmit rotary movement between the two shaft portions and to the movable contact or to the intermediate drive element;
wherein the screw and the pin are screwed together so that the pin passes through the movable contact or the intermediate drive element(s) and the head of the pin and the washer bear laterally against opposite sides of the movable contact;
wherein the head (370) of the pin is a tight fit in a tapped hole (42b) formed in the end of one of the shaft portions (40b) and the cap (33) is likewise a tight fit in a tapped hole (42a) formed in the end of the other shaft portion (40a); these tight fits serving to minimize bending between the shaft portions (40a, 40b); and
wherein the washer (31) and/or the head (320) of the screw is/are fitted at least in part with clearance in the cap so as to provide the longitudinal axial clearance (35) along the shaft between the shaft portion (40a) with which the cap (33) is engaged and the contact or the intermediate contact drive element(s) (52).

8. Electrical switchgear (A, B, C) according to claim 7, wherein the intermediate drive element (52) of the movable contact is clamped between two tubular spacers (38, 39) on either side thereof.

9. Electrical switchgear (A, B, C) according to any one of claims 6 to 8, wherein the washer (31) has a first portion (310) and a second portion (34) that extends transversely relative to the first portion, the first portion being a loose fit with clearance relative to the inside wall (330) relative to the cap (33), while the second portion of the washer is in lateral abutment and defines the axial clearance with the cap.

10. Electrical switchgear (A, B, C) according to any one of claims 7 to 9, including two bearings (53, 60; 54, 61) mounted on the metal casing (37) individually on either side of the movable contact, the two bearings serving to support and guide rotation of the pin, and thus of the two shaft portions.

11. Electrical switchgear (A, B, C) according to any one of claims 7 to 10, wherein each shaft portion (40a, 40b) includes a duct (43a, 43b) for connecting the tapped hole (42a, 42b) to the inside of the tank, thereby filling it with the dielectric insulating gas (SF₆).

12. A three-phase medium or high voltage gas-insulated substation (GIS) including, for at least one phase, electrical switchgear (A, B, C) according to any preceding claim, in the casing (57) of which there are housed, at least in part, the movable contacts (51, 55) of two switches, such as a busbar disconnector and a grounding disconnector.

13. A three-phase substation (GIS) according to claim 12, including for each of the three phases electrical switchgear (A, B, C) according to any preceding claim in the casing (57) of which are housed at least in part the movable contacts (51a & 55a, 51b & 55b, 51c & 55c) of two switches, such as a busbar disconnector and a grounding disconnector, the three casings (57) being housed in a common metal tank (10) with their contacts arranged parallel to one another and with a common drive shaft made up of four different shaft portions (40a, 40b, 40c, 40d) and arranged transversely relative to the contacts, the two portions (40a, 40d) of the drive shaft that are arranged outside the casings (57) being carried by the tank via a respective bearing (62, 63) mounted in leaktight manner in the tank, one of the two portions (40a) arranged outside the casing being connected to an actuator that is arranged outside the tank.
